# EUROPÄISCHE PATENTSCHRIFT

(11) **EP 1 549 781 B1**
(45) Veröffentlichungstag und Bekanntmachung des Hinweises auf die Patenterteilung: **27.10.2010**
(21) Anmeldenummer: 03757686.5
(22) Anmeldetag: 26.09.2003
(51) Int. Cl.: C23C 16/30, C23C 16/40, C04B 41/50, B23B 27/14, C23C 30/00

(54) **VERBUNDWERKSTOFF**
COMPOSITE MATERIAL
MATERIAU COMPOSITE

(30) Priorität: 07.10.2002 DE 10246635; 05.11.2002 DE 10251404
(43) Veröffentlichungstag der Anmeldung: 06.07.2005
(73) Patentinhaber: Kennametal Widia Produktions GmbH & Co. KG, 45145 Essen (DE)
(72) Erfinder: SOTTKE, Volkmar, 45479 Mülheim (DE); WESTPHAL, Hartmut, 36466 Dermbach/Rhön (DE); VAN DEN BERG, Hendrikus, NL-5925 BT Venlo-Blerick (NL)
(74) Vertreter: Vomberg, Friedhelm
(86) Internationale Anmeldenummer: PCT/DE2003/003228
(87) Internationale Veröffentlichungsnummer: WO 2004/033751

(56) Entgegenhaltungen:
- EP-A- 0 408 535
- EP-A- 1 103 635
- DE-A- 2 233 700
- DE-A- 2 825 009
- DE-A- 19 518 927
- DE-A- 19 942 303

## Beschreibung

Die Erfindung betrifft einen Verbundwerkstoff aus einem Grundkörper mit einer mehrlagigen Beschichtung, die mindestens eine mehrphasige Schicht aus Oxiden des Aluminiums, des Zirkoniums und/oder des Hafniums, und des Titans und eine einphasige Schicht aus Al₂O₃, ZrO₂ oder HfO₂ enthält.

Solche Verbundkörper werden beispielsweise als Schneideinsätze für Zerspannungszwecke, nämlich zum Drehen, Fräsen oder Bohren eingesetzt. Die Grundkörper, auf denen die Beschichtung mittels eines physikalischen oder chemischen Aufdampfverfahrens (PVD oder CVD) aufgetragen wird, können aus Hartmetall, einem Cermet, aus Stahl oder einer Keramik bestehen.

Bereits in der DE 27 36 982 A1 wird eine Verschleißschutzschicht für Formteile, insbesondere für Werkzeuge, bestehend aus einem Formkörper, vorzugsweise aus Hartmetall und einer oder mehren Oberflächenschichten beschrieben, wovon mindestens eine Schutzschicht aus einer keramischen Matrix besteht, in die ein weiteres Material eingelagert ist. Die keramische Matrix und das eingelagerte Material besitzen verschiedene thermische Ausdehnungskoeffizienten, so dass die Schutzschicht von feinen Mikrorissen durchzogen ist. Als Einlagerungsmaterial in eine keramische Matrix aus Al₂O₃ wird unstabilisiertes und/oder teilstabilisiertes ZrO₂ vorgeschlagen. Zur Herstellung einer solchen Schicht nach dem CVD-Verfahren werden AlCl₃, CO₂ und H₂ in die Gasphase zur Bildung von Al₂O₃ sowie ZrCl₄ und Wasserdampf (H₂O) zur Bildung von ZrO₂ in einen Reaktionsbehälter bei 1100°C eingelassen. Durch den Dichteunterschied zwischen der oberhalb einer Umwandlungstemperatur von etwa 1100°C beständigen tetragonalen und der unterhalb von etwa 1100°C beständigen monoklinen Modifikation des ZrO₂ ist bei einer entsprechenden Phasenumwandlung eine erhebliche Volumenänderung des eingelagerten ZrO₂ gegeben. Hieraus folgt, dass mit zunehmendem Volumenanteil des ZrO₂ gleichzeitig die Mikrorissdichte in der abgeschiedenen keramischen Schicht erhöht wird.

In der DE 28 25 009 C2 wird ein Hartmetallkörper mit einer dünnen verschleißfesten Oberflächenschicht aus Al₂O₃ beschrieben, dass ganz oder zu wenigstens 85% aus der κ-Modifikation besteht, wobei ein gegebenenfalls aus der α-Modifikation bestehender Rest auf der Oberfläche Bereiche bzw. Flecke mit einer Größe von höchstens 10µm bildet. Die Aluminiumoxidschicht kann zusätzlich Zusätze an Titan, Zirkonium, und/oder Hafnium enthalten. Zur Erstellung dieser keramischen Schicht mittels des CVD-Verfahrens werden der Gasmischung neben H₂, AlCl₃, CO₂ und CO noch geringe Mengen von 0,03 bis 0,5% TiCl₄ zugesetzt. Dieser Zusatz dient jedoch ausschließlich oder beinahe ausschließlich zur Bildung der κ-Al₂O₃-Phase.

Ein weiteres CVD-Verfahren zur Abscheidung von Al₂O₃ und/oder ZrO₂ unter Verwendung von einem zusätzlichen Reagenz, wie Schwefelwasserstoff, wird in der EP 0 523 021 B1 beschrieben.

Die DE 195 18 927 A1 beschreibt ein beschichtetes Schneidwerkzeug, bestehend aus einem Sinterkarbid- oder Keramiksubstrat mit einem verschleißfesten Verbundkeramiküberzug, der zwei unterschiedliche Metalloxidphasen, z. B. aus Al₂O₃ und ZrO₂, sowie außerdem ein Dotierungsmittel aufweist, dass aus der Gruppe Schwefel, Selen, Tellur, Phosphor, Arsen, Antimon, Wismut oder Verbindungen der genannten Elemente ausgewählt ist. Zur Herstellung dieser zweiphasigen Schicht nach einem CVD-Verfahren werden beispielsweise AlCl₃ und ZrCl₄, CO₂ mit H₂ als Trägergas neben einem H₂S-Gas bei einer Temperatur von etwa 700 bis 1250°C und einem Druck von 133 Pa bis zum Umgebungsdruck über den Substratkörper geleitet, wobei sich die zweiphasige Schicht mit dem Dotierungsmittel abscheidet.

Die EP 0 786 536 A1 beschreibt einen beschichteten Hartmetallkörper mit einer 3 bis 20µm dicken Aluminiumoxidschicht, die mittels CVD und/oder PVD abgeschieden worden ist und die 0,005 bis 0,5 Gewichtsprozent Chlor enthalten soll. Fakultativ können in dieser Schicht 0,5 bis 10 Gewichtsprozent Zr und/oder Hf sowie 1,5 bis 15 Gewichtsprozent Ti enthalten sein.

Die EP 0 162 656 A2 beschreibt eine Viellagenbeschichtung auf einem Hartmetall-Substratkörper mit einer inneren Schicht, die aus wenigstens einem Karbid, Nitrid, Carbonitrid, Carbooxinitrid, Oxinitrid, Bornitrid oder Borcarbonitrid des Titans und einer äußeren Viellagenschicht mit einer Gesamtdicke von 5 bis 20µm besteht und mit einer äußeren Schicht aus einer Mehrzahl von Al₂O₃-Schichten mit einer jeweiligen Dicke von 0,01 bis 2µm. von denen jede aus einem Al₂O₃-Film besteht, in dem Titanoxid gelöst oder zumindest 30 Volumenprozent des Titanoxids koexistent sind. Die Lagen sind durch Zwischenschichten einer jeweiligen Dicke von 0,01 bis 2µm getrennt, die jeweils aus TiC, TiN, TiCN, TiCNO, TiNO, Titan-Oxiden, Ti(B, N), Ti(B, N, C), SiC, AIN und AION bestehen.

In der WO 00/17 416 wird ein Verbundwerkstoff aus einem beschichteten Hartmetall- oder Cermetgrundkörper beschrieben, auf dem die einzige oder bei einer mehrlagigen Beschichtung mindestens eine 0,5µm bis 25µm dicke Schicht, vorzugsweise die äußerste, eine Al₂O₃- und eine aus ZrO₂ und/oder HfO₂ bestehende Phase sowie eine dritte feindispersive Phase enthält, die aus einem Oxid, Oxidcarbid, Oxinitrid oder Oxicarbonitrid des Titans besteht. Der Anteil der dritten Phase an der Gesamtmenge dieser Schicht beträgt 0,2 bis 5 mol-Prozent. Zur Herstellung einer solchen dreiphasigen Schicht wird ein CVD-Verfahren mit Abscheidetemperaturen zwischen 900°C und 1000°C gewählt, bei dem die für die Abscheidung notwendigen Gase Chloride des Al, Zr, Hf, ferner CO₂, H₂, CH₄ und N₂ oder Innertgase unter Drücken von 10 bis 100.000 Pa enthält. Das beispielsweise als dritte Phase eingelagerte TiOₓ hat einen positiven Effekt auf die Wachstumsgeschwindigkeit und auf die Partikelgröße der Aluminium- und Zirkonium- oder Hafniumoxide. Vorzugsweise wird eine Beschichtungstemperatur von 960°C gewählt, bei der das ZrO₂ in der monoklinen Form vorliegt. Aus der genannten Druckschrift sind auch Hartmetall-Substratkörper bekannt, die eine Schichtfolge TiN-Ti(C, N) und die genannte dreiphasige Schicht aufweise.

Die DE 199 42 303 A1 beschreibt ein Verbundwerkstoff aus einem beschichteten Hartmetall- oder Cermet-Grundkörper, auf dem die einzige oder bei einer mehrlagigen Beschichtung mindestens eine 0,5 µm bis 25 µm dicke Schicht, vorzugsweise die äußerste, eine AlO₃- und eine Phase enthält, die aus ZrO₂ und/oder HfO₂ besteht sowie eine dritte feindispersive Phase aus einem Oxid, Oxidcarbid, Oxinitrid oder Oxicarbonitrid des Titans. Als eine Ausführungsform des Verbundwerkstoffes wird eine 3-lagige Beschichtung erwähnt, deren erste Lage beispielsweise aus Titannitrid oder Titancarbonitrid besteht, deren zweite Lage dreiphasig aus Al₂O₃/ZrO₂ oder HfO₂/TiOₓ besteht und deren Außenlage aus TiN, ZrO₂, HfO₂, ZrCN oder HfCN besteht. Schichtfolgen aus TiN oder TiCN in Verbindung mit κ-Al₂O₃ werden in der EP 1103 635 A2 erwähnt.

Schließlich wird in der EP 0 408 535 A1 eine Schichtfolge erwähnt, die eine α-Al₂O₃-Schicht und eine κ-Al₂O₃-Schicht enthält und beispielsweise auf einer Schicht, bestehend aus Carbiden, Nitriden, Carbooxinitriden, Carbooxiden oder Carbonitriden einer der Elemente Ti, Zr, Hf, V, Nb, Ta, Or, Mo, W, Si und/oder B abgeschieden sein kann. Die zusätzliche Außenlage auf den beiden Al₂O₃-Schichten kann aus Titaniumnitrid bestehen.

Es ist Aufgabe der vorliegenden Erfindung, einen Verbundkörper anzugeben, der beim Zerspanungseinsatz höhere Schneidleistungen sowie längere Standzeiten liefert. Hohe Schneidleistungen sind insbesondere durch die gewünscht hohen Schnittgeschwindigkeiten als auch die Dicke des abgetragenen Spanes bestimmt. Wo es möglich ist, sollen solche Schneideinsätze im sogenannten trockenen Schnitt verwendet werden.

Diese Aufgabe wird durch ein Verbundwerkstoff nach Anspruch 1 gelöst. Weiterentwicklungen der Erfindung sind in den Unteransprüchen beschrieben.

Der Grundgedanke der vorliegenden Erfindung besteht darin, auf einem Grundkörper mehrere Lagen, jeweils bestehend aus einer mehrphasigen Schicht aus den Oxiden des Aluminiums, des Zirkoniums und/oder des Hafniums und des Titans (als dreiphasige Schicht) und einer einphasigen Schicht aus Al₂O₃, ZrO₂ oder HfO₂ zu verwenden. In der Beschichtung liegt somit mindestens eine mehrphasige Oxid-Schicht sowie mindestens eine einphasige Oxid-Schicht vor. Die mehrphasige Schicht kann neben den genannten drei Oxid-Bestandteilen zusätzlich noch MgO enthalten. Nach der Erfindung liegen jedoch mindestens zwei, vorzugsweise mindestens drei Lagen vor, von denen jede aus der genannten mehrphasigen Schicht aus Oxides des Al, Zr, Ti oder Al, Hf,

Ti und/oder Al, Zr, Ti, Mg und/oder Al, Hf, Ti, Mg und aus einer einphasigen Oxid-Schicht aus Hf, Zr oder Al besteht. Vorzugsweise liegen mindestens drei dreiphasige oder vierphasige Oxid-Schichten vor, zwischen denen jeweils eine einphasige Oxid-Schicht angeordnet ist und wobei die einphasige Oxid-Schicht auch die äußere Deckschicht bildet. Diese Schichten weisen ein feinkörniges Gefüge und eine gleichmäßige Phasenverteilung auf und besitzen eine hohe Wärmeisolation.

Der Grundkörper kann auch einem Hartmetall, einem Cermet aus Stahl oder einem keramischen Werkstoff bestehen.

Zwischen dem Substrat-Körper und einer ersten Oxid-Schicht, die vorzugsweise eine mehrphasige Oxid-Schicht ist, ist mindestens eine Schicht aus einem Carbonitrid des Titans, Hafniums oder Zirkoniums angeordnet. Diese Deckschicht besitzt eine Dicke zwischen 1 bis 15µm, insbesondere von 3 bis 8µm.

Nach einer alternativen Ausgestaltung der Erfindung ist es jedoch ebenso möglich, zwischen der mehrphasigen Oxid-Schicht und der einphasigen Oxid-Schicht eine oder mehrere Zwischenschichten aus Titan-, Hafnium- oder Zirkoncarbonitrid anzuordnen. Diese Zwischenschichten haben vorzugsweise eine Dicke zwischen 0,2 bis 3µm, insbesondere von 2µm.

Die Gesamtdicke aller mehrphasigen Oxid-Schichten und aller einphasigen Oxid-Schichten liegt bevorzugt zwischen 6 und 20µm, insbesondere bei 10µm. Die Dicke einer einzelnen mehrphasigen Oxid-Schicht beträgt 2 bis 6µm, vorzugsweise 4µm und/oder die Dicke einer einzelnen einphasigen Oxid-Schicht 1 bis 5µm, vorzugsweise 3µm.

Die mehrlagige Beschichtung wird nach einem CVD-Verfahren hergestellt, wie es prinzipiell aus der WO 00/17 416 bzw. als sogenanntes Mitteltemperatur-CVD-Verfahren bekannt ist.

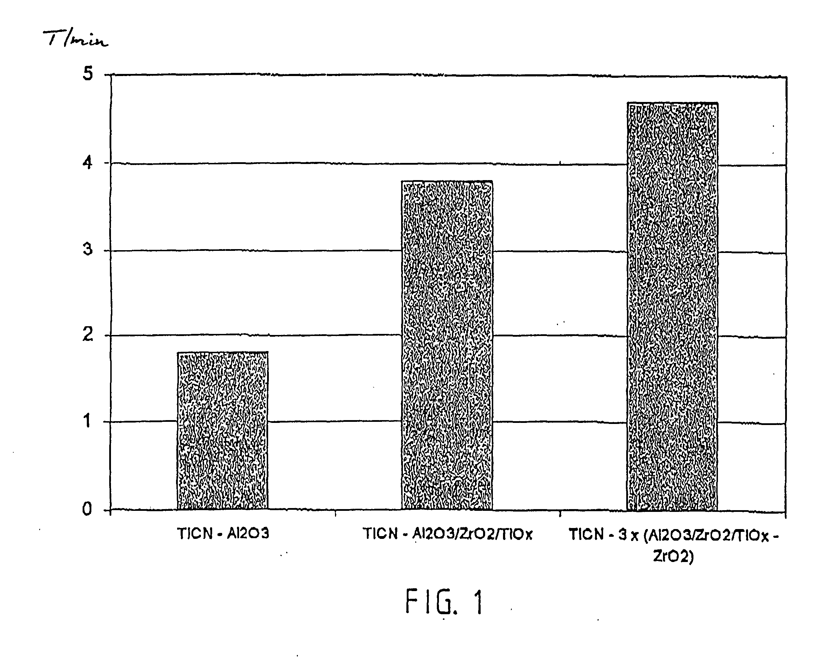

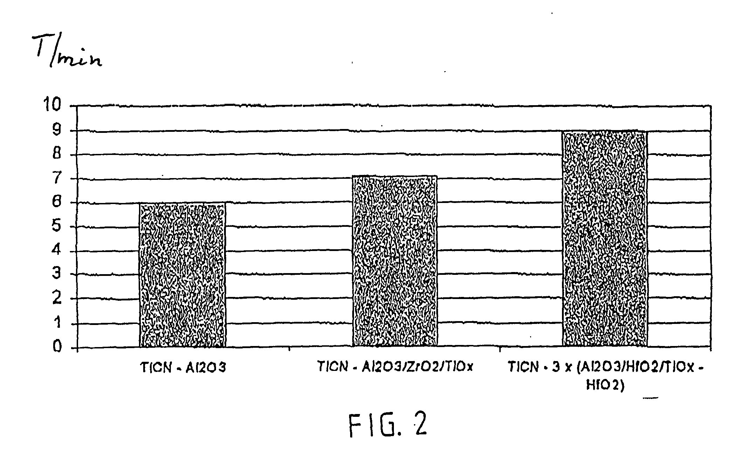

Weitere Vorteile der Erfindung werden anhand eines Ausführungsbeispieles beschrieben. Es zeigen
- Fig. 1-3: jeweils Diagramme, die Auskunft über die verbesserte Standzeit des erfindungsgemäßen Verbundwerkstoffes im Zerspanungseinsatz im Vergleich zum Stand der Technik liefern.

Untersuchungsobjekt war in allen drei Fällen ein Schneideinsatz des Typs CNMG120412-5. In allen drei Fällen bestand der Substratkörper aus einem Hartmetallwerkstoff (THM), der jedoch unterschiedlich beschichtet war. In einer ersten Versuchsreihe ist ein Werkstück aus Grauguss mit einer Schneidgeschwindigkeit von 450 m/min mit einer Schnitttiefe von 2,5 mm und einem Vorschub von 0,315 mm/Umdrehung bearbeitet worden. Der erste Schneidkörper bestand aus einem Hartmetallgrundkörper, der mit einer zweilagigen Schicht aus TiCN und Al₂O₃ (als Außenschicht) beschichtet war. Die erreichte Standzeit lag unter 2 Min. Eine deutlich verbesserte Standzeit ergab sich bei einer zweilagigen Schicht, bei der auf einer TiCN-Deckschicht eine dreiphasige Oxid-Schicht gemäß WO 00/17 416 aufgetragen war, bestehend aus Al₂O₃/ZrO₂/TiOₓ.

Eine nochmalige deutliche Standzeitverbesserung konnte jedoch mit einem Schneideinsatz erreicht werden, der eine substratkörpernahe TiCN-Schicht sowie eine sechslagige Außenschicht besaß, die aus jeweils drei Einzellagen aus einer dreiphasigen Oxid-Schicht und einer einphasigen ZrO₂-Schicht bestanden.

In einem zweiten Versuch ist ein Graugusswerkstück mit extrem rauher Oberfläche durch Drehen behandelt worden, wobei im Vergleich zu dem voran geschilderten Versuch lediglich die Schneidgeschwindigkeit auf 200 m/min gesenkt worden ist. Aufgrund dieser Schnittgeschwindigkeiten ergaben sich Standzeiten von 6 Min für Schneideinsätze mit einer TiCN-Al₂O₃-Beschichtung, von ca. 7. Min für Schneideinsätze mit einer TiCN-Al₂O₃/ZrO₂/TiOₓ-Beschichtung und eine Standzeit von 9 Min für einen Schneideinsatz mit der erfindungsgemäßen Beschichtung, bei der im Unterschied zur vorbeschriebenen Version jedoch ein dreifacher Wechsel aus einer dreiphasigen Oxid-Schicht aus Al₂O₃/HfO₂/TiOₓ und der einphasigen Oxid-Schicht aus HfO₂ vorhanden war.

Die vorstehend behandelten Schneidversuche sind im sogenannten trockenen Schnitt durchgeführt worden.

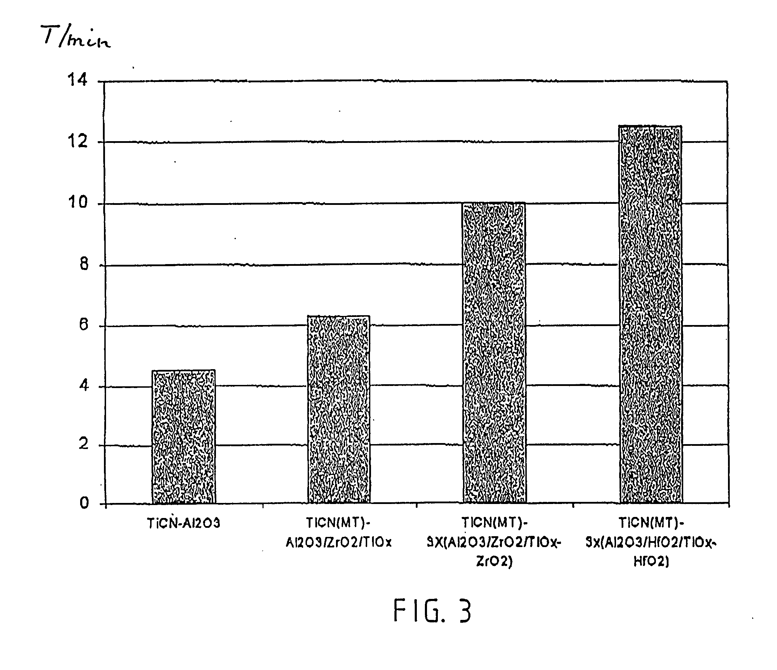

Wie Fig. 3 zeigt, lassen sich jedoch bei Verwendung eines Kühlschmierstoffes ebenfalls erhöhte Standzeiten erzielen. Bei dem Drehen von Grauguss mit einer Schnittgeschwindigkeit von 450 m/min, einer Schneidtiefe von 2,5mm, einem Vorschub von 0,315mm/Umdrehung betrug die Lebensdauer eines Schneideinsatzes mit einer TiCN-Al₂O₃-Beschichtung ca. 4,5 Min., die Lebensdauer eines Schneideinsatzes mit einer Beschichtung gemäß WO 00/17 416 ca. 6,5 Min., wohingegen die erfindungsgemäßen Beschichtungen Standzeiten von 10 bzw. 12,5 Min. erzielen ließen. Insbesondere bei Verwendung von HfO₂ als einphasige Oxid-Schicht konnte gegenüber der bereits verbesserten Standzeit bei Verwendung von ZrO₂ als einphasige Oxid-Schicht eine nochmalige deutliche Steigerung erzielt werden. Alle Beschichtungen sind im sogenannten CVD-MT (Mitteltemperatur)-Verfahren unter den selben Verfahrensbedingungen aufgetragen worden.

## Patentansprüche

1. Verbundwerkstoff aus einem Grundkörper mit einer mehrlagigen Beschichtung, die mindestens eine mehrphasige Schicht aus Oxiden des Aluminiums, des Zirkoniums oder des Hafniums, und des Titans und eine einphasige Schicht aus Al₂O₃, ZrO₂ oder HfO₂ enthält, **gekennzeichnet durch** mindestens zwei, vorzugsweise drei Lagen, von denen jede
entweder aus einer mehrphasigen Schicht aus Oxiden des Al, Zr, Ti oder Al, Hf, Ti und/oder Al, Zr, Ti, Mg und/oder Al, Hf, Ti, Mg und aus einer einphasigen Oxid-Schicht aus Hf, Zr oder Al besteht
oder
aus einer mehrphasigen Schicht aus Oxiden des Al, Zr, Ti oder Al, Hf, Ti und/oder Al, Zr, Ti, Mg und/oder Al, Hf, Ti, Mg, einer oder mehreren Zwischenschichten aus TiCN, HfCN oder ZrCN und aus einer einphasigen Oxid-Schicht aus Hf, Zr oder Al besteht.

2. Verbundwerkstoff nach Anspruch 1, **dadurch gekennzeichnet, dass** der Grundkörper aus einem Hartmetall, einem Cermet, aus Stahl oder einer Keramik besteht.

3. Verbundwerkstoff nach einem der Ansprüche 1 oder 2, **dadurch gekennzeichnet, dass** zwischen dem Substratkörper und einer ersten Oxid-Schicht, die vorzugsweise eine mehrphasige Oxid-Schicht ist, mindestens eine Schicht aus TiCN, HfCN oder ZrCN angeordnet ist, die weiterhin vorzugsweise eine Dicke von 1 bis 15µm, insbesondere von 3 bis 8µm aufweist.

4. Verbundwerkstoff nach einem der Ansprüche 1 bis 3, **dadurch gekennzeichnet, dass** die eine oder mehreren Zwischenschichten (jeweils) zwischen 0,2µm bis 3µm, insbesondere 2µm dick ist/sind.

5. Verbundwerkstoff nach einem der Ansprüche 1 bis 4, **dadurch gekennzeichnet, dass** die Gesamtdicke aller mehrphasigen Oxid-Schichten und aller einphasigen Oxid-Schichten 6µm bis 20µm, vorzugsweise 10µm beträgt, wobei weiterhin vorzugsweise die Dicke einer einzelnen mehrphasigen Oxid-Schicht 2 bis 6µm, vorzugsweise 4µm und/oder die Dicke einer einzelnen einphasigen Oxid-Schicht 1 bis 5µm, vorzugsweise 3µm beträgt.

6. Verbundwerkstoff nach einem der Ansprüche 1 bis 5, **dadurch gekennzeichnet, dass** die mehrlagige Beschichtung mittels CVD hergestellt worden ist.

## Claims

1. Composite material of a base body with a multilayer coating which has at least one multiphase layer of oxides of aluminum, zirconium or hafnium, and titanium and a single phase layer of Al₂O₃, ZrO₂ or HfO₂, **characterised by** at least two, preferably at least three, layers which are comprised each either of a multiphase layer of oxides of Al, Zr, Ti or Al, Hf, Ti, and/or Al, Zr, Ti, Mg and/or Al, Hf, Ti, Mg and of a one phase oxide layer of Hf, Zr or Al, or of a multiphase layer of oxides of Al, Zr, Ti or Al, Hf, Ti and/or Al, Zr, Ti, Mg and/or Al, Hf, Ti, Mg, one or more intermediate layers of TiCN, HfCN or ZrCN and of a one phase oxide layer of Hf, Zr or Al.

2. Composite material according to claim 1 **characterised in that** the base body is composed of a hard metal, steel, cermet or ceramic.

3. Composite material according to one of claims 1 or 2 **characterised in that** between the substrate body and a first oxide layer, which preferably is a multiphase oxide layer, at least one layer of TiCN, HfCN or ZrCN is provided which preferably has a thickness of 1 to 15 µm, especially 3 to 8 µm.

4. Composite material according to one of claims 1 to 3 **characterised in that** the single intermediate layer has or several intermediate layers (each) have a thickness between 0.2 µm to 3 µm, especially 2 µm.

5. Composite material according to one of claims 1 to 4 **characterised in that** the total thickness of all of the multiphase oxide layers and all single phase oxide layers is 6 to 20 µm, preferably 10 µm, whereby further preferably the thickness of an individual multiphase oxide layer is 2 to 6 µm, preferably 4 µm, and/or the thickness of the individual single phase oxide layer is 1 to 5 µm, preferably 3 µm.

6. Composite material according to one of claims 1 to 5 **characterised in that** the multilayer coating is produced by means of CVD.

## Revendications

1. Matériau composite se composant d'un corps de base ayant un revêtement à plusieurs couches qui comprend au moins une couche à phases multiples en oxydes de l'aluminium, du zirconium ou de l'hafnium et du titane ainsi qu'une couche à phase unique en Al₂O₃, ZrO₂ ou HfO₂, **caractérisé par** au moins deux, de préférence trois couches dont chacune se compose soit d'une couche à phases multiples en oxydes de l'Al, du Zr, du Ti ou de l'Al, de l'Hf, du Ti et/ou de l'Al, du Zr, du Ti, du Mg et/ou de l'Al, de l'Hf, du Ti, du Mg et d'une couche d'oxyde à phase unique en Hf, Zr ou Al, soit d'une couche à phases multiples en oxydes de l'Al, du Zr, du Ti ou de l'Al, de l'Hf, du Ti et/ou de l'Al, du Zr, du Ti, du Mg et/ou de l'Al, de l'Hf, du Ti, du Mg, d'une ou plusieurs couche(s) intermédiaire(s) en TiCN, HfCN ou ZrCN et d'une couche d'oxyde à phase unique en Hf, Zr ou Al.

2. Matériau composite selon la revendication 1, **caractérisé par le fait que** le corps de base est réalisé en un métal dur, en un cermet, en acier ou en une céramique.

3. Matériau composite selon l'une quelconque des revendications 1 ou 2, **caractérisé par le fait qu'**entre le corps substrat et une première couche d'oxyde qui, de préférence, est une couche d'oxyde à phases multiples est disposée au moins une couche en TiCN, HfCN ou ZrCN qui, de préférence encore, présente une épaisseur comprise entre 1 et 15 µm, en particulier entre 3 et 8 µm.

4. Matériau composite selon l'une quelconque des revendications 1 à 3, **caractérisé par le fait que** ladite une ou lesdites plusieurs couche(s) intermédiaire(s) présente(nt) (chacune) une épaisseur comprise entre 0,2 µm et 3 µm, en particulier de 2 µm.

5. Matériau composite selon l'une quelconque des revendications 1 à 4, **caractérisé par le fait que** l'épaisseur totale de toutes les couches d'oxydes à phases multiples et de toutes les couches d'oxydes à phase unique est comprise entre 6 µm et 20 µm, de préférence elle est de 10 µm, de préférence encore l'épaisseur d'une couche d'oxyde individuelle à phases multiples étant comprise entre 2 et 6 µm, de préférence de 4 µm, et/ou l'épaisseur d'une couche d'oxyde individuelle à phase unique étant comprise entre 1 et 5 µm, de préférence de 3 µm.

6. Matériau composite selon l'une quelconque des revendications 1 à 5, **caractérisé par le fait que** ledit revêtement à plusieurs couches a été réalisé par le procédé de dépôt chimique en phase vapeur (CVD).
